# EUROPÄISCHE PATENTSCHRIFT

(11) **EP 1 924 456 B1**
(45) Veröffentlichungstag und Bekanntmachung des Hinweises auf die Patenterteilung: **22.06.2011**
(21) Anmeldenummer: 06793282.2
(22) Anmeldetag: 06.09.2006
(51) Int. Cl.: B60K 15/03

(54) **ZUR ABDICHTUNG EINER ÖFFNUNG EINES KRAFTSTOFFBEHÄLTERS EINES KRAFTFAHRZEUGES VORGESEHENER FLANSCH**
FLANGE FOR SEALING AN OPENING OF A FUEL CONTAINER OF A MOTOR VEHICLE
BRIDE DESTINEE A ETANCHEIFIER UNE OUVERTURE D'UN RESERVOIR A CARBURANT DE VEHICULE A MOTEUR

(30) Priorität: 13.09.2005 DE 102005043818
(43) Veröffentlichungstag der Anmeldung: 28.05.2008
(73) Patentinhaber: Continental Automotive GmbH, 30165 Hannover (DE)
(72) Erfinder: GRAF, Rolf, 67346 Speyer (DE)
(86) Internationale Anmeldenummer: PCT/EP2006/066081
(87) Internationale Veröffentlichungsnummer: WO 2007/031455

(56) Entgegenhaltungen:
- EP-B1- 1 169 566
- DE-A1- 3 903 558

## Beschreibung

Die Erfindung betrifft einen zur Abdichtung einer Öffnung eines Kraftstoffbehälters eines Kraftfahrzeuges vorgesehenen Flansch mit einer Wandung, mit einer zur Anordnung an der Außenseite des Kraftstoffbehälters anzuordnenden Außenseite der Wandung und einer in der vorgesehenen Montagestellung zum Inneren des Kraftstoffbehälters weisenden Innenseite der Wandung.

DE 3903558A1 offenbart einen Flansch gemäß dem Oberbegriff des Anspruchs 1.

Solche Flansche werden zum Verschließen und Abdichten von meist als Montageöffnungen ausgebildeten Öffnungen bei Kraftstoffbehältern heutiger Kraftfahrzeuge häufig eingesetzt und sind aus der Praxis bekannt. Häufig sind zudem auf oder in der Wandung weitere Bauteile angeordnet, welche elektrische oder hydraulische Durchführungen aufweisen. Sofern diese Bauteile eine Verlustleistung erzeugen, ist die Wärme abzuführen. Zur Wärmeabfuhr sind aus der Praxis Kühlelemente bekannt geworden, welche auf den die Verlustleistung abgebenden Bauteilen befestigt werden. Die Kühlelemente geben die Wärme der Bauteile in die Umgebung des Kraftstoffbehälters ab. Nachteilig bei dem bekannten Flansch ist, dass die Kühlelemente sehr kostenintensiv sind und zudem sehr sperrig von dem Flansch weg ragen.

Der Erfindung liegt das Problem zugrunde, einen Flansch der eingangs genannten Art so zu gestalten, dass unerwünschte Wärme besonders zuverlässig abgeleitet wird und dass er besonders kostengünstig herstellbar ist.

Dieses Problem wird mit den Merkmalen des Anspruchs 1 gelöst.

Durch diese Gestaltung lässt sich die von dem Elektronikbauteil erzeugte Wärme auf besonders einfache Weise an den Kraftstoff im Kraftstoffbehälter abführen. Da innerhalb des Kraftstoffbehälters ohnehin Schwappbewegungen des Kraftstoffs und Luftbewegungen vorhanden sind, lässt sich die Wärme von dem wärmeleitenden Element auf besonders einfache Weise abführen. Dank der zuverlässigen Wärmeabgabe in den Kraftstoffbehälter ist der Einsatz eines großen und sperrigen Kühlkörpers nicht erforderlich. Der erfindungsgemäße Flansch ermöglicht daher die besonders zuverlässige Ableitung unerwünschter Wärme und ist zudem besonders kostengünstig herstellbar. Vorzugsweise ist der vom Kraftstoff abgetrennte, das Elektronikbauteil aufweisende Bereich die Außenseite des Flansches.

Das wärmeleitende Element ist einstückig mit einer ohnehin vorhandenen Durchführung einer elektrischen Leitung ausgebildet. Eine Wärmeabfuhr von gegenüber der Durchführung zu isolierenden Bauteilen lässt sich jedoch gemäß einer vorteilhaften Weiterbildung der Erfindung einfach durchführen, wenn das wärmeleitende Element und eine Durchführung eines elektrischen Kontaktes durch die Wandung als unterschiedliche Bauteile ausgebildet sind.

Das wärmeleitende Element könnte beispielsweise flach auf der Innenseite befestigt sein. Zur Verbesserung des Wärmeübergangs an den im Kraftstoffbehälter befindlichen Kraftstoff trägt es jedoch gemäß einer anderen vorteilhaften Weiterbildung der Erfindung bei, wenn das wärmeleitende Element über der Innenseite übersteht.

Eine Kühlung des wärmeleitenden Elements erfolgt einfach durch natürliche Konvektion und durch Schwappbewegungen des Kraftstoffs innerhalb des Kraftstoffbehälters, wenn das wärmeleitende Element frei von der Innenseite aus in den Kraftstoffbehälter hineinragt. Hierdurch ist der erfindungsgemäße Flansch besonders einfach aufgebaut und lässt sich kostengünstig fertigen. Zur Verbesserung der Wärmeabgabe lässt sich beispielsweise ein von einer im Kraftstoffbehälter angeordneten Saugstrahlpumpe erzeugter Freistrahl auf das wärmeleitende Element richten.

Zur weiteren Verbesserung des Wärmeübergangs von dem wärmeleitenden Element zu dem Kraftstoff trägt es gemäß einer anderen vorteilhaften Weiterbildung der Erfindung bei, wenn an der Innenseite ein das wärmeleitende Element übergreifendes Gehäuse angeordnet ist und wenn das Gehäuse einen Anschluss für eine Kraftstoffleitung hat. An dem Anschluss lässt sich eine Förderleitung einer Saugstrahlpumpe anschließen, welche beispielsweise Kraftstoff aus einer Kammer des Kraftstoffbehälters zu einer anderen Kammer fördert.

In einer vorteilhaften Ausgestaltung ist das Gehäuse als Führung für anströmenden Kraftstoff ausgebildet und hat eine in den Kraftstoffbehälter weisende Öffnung.

Das Elektronikbauteil lässt sich gemäß einer anderen vorteilhaften Weiterbildung der Erfindung von zu einer Brennkraftmaschine des Kraftfahrzeuges geführten Vorlaufleitung kühlen, wenn das Gehäuse gegenüber dem Flansch abgedichtet ist und wenn ein weiterer Anschluss an der Außenseite des Flansches angeordnet und mit dem Gehäuse verbunden ist. Durch diese Gestaltung ist die Vorlaufleitung durch das Gehäuse geführt. Damit wird das Elektronikbauteil während des Betriebs der Brennkraftmaschine und damit auch des Kraftfahrzeuges dauerhaft gekühlt.

Der erfindungsgemäße Flansch weist eine besonders geringe Anzahl an Bauteilen auf, wenn das Elektronikbauteil auf einer Platine angeordnet ist und wenn das wärmeleitende Element einstückig mit einem Träger der Platine ausgebildet ist.

Das Elektronikbauteil lässt sich gemäß einer anderen vorteilhaften Weiterbildung der Erfindung zuverlässig vor äußeren Einflüssen schützen, wenn auf der dem an der Innenseite angeordneten Gehäuse gegenüberliegend auf der Außenseite ein das Elektronikbauteil abdeckendes Schutzgehäuse angeordnet ist oder wenn das Elektronikbauteil mit einer Vergussmasse überzogen ist.

Der erfindungsgemäße Flansch lässt sich besonders kostengünstig fertigen, wenn die Wandung aus Kunststoff und das wärmeleitende Element aus Metall gefertigt sind. Die Abdichtung eines solchen wärmeleitenden Elements gegenüber dem Kunststoff ist von Durchführungen von elektrischen Leitungen allgemein bekannt.

Das wärmeleitende Element ermöglicht gemäß einer anderen vorteilhaften Weiterbildung der Erfindung eine besonders hohe Wärmeabgabe bei einer besonders hohen mechanischen Stabilität, wenn das wärmeleitende Element bügelförmig von der Innenseite absteht und mit seinem freien Ende in dem Kunststoff der Wandung befestigt ist.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: eine Schnittdarstellung durch eine erste Ausfüh- rungsform des erfindungsgemäßen Flansches,
- Figur 2: eine weitere Ausführungsform des erfindungsgemäßen Flansches in einer Schnittdarstellung.

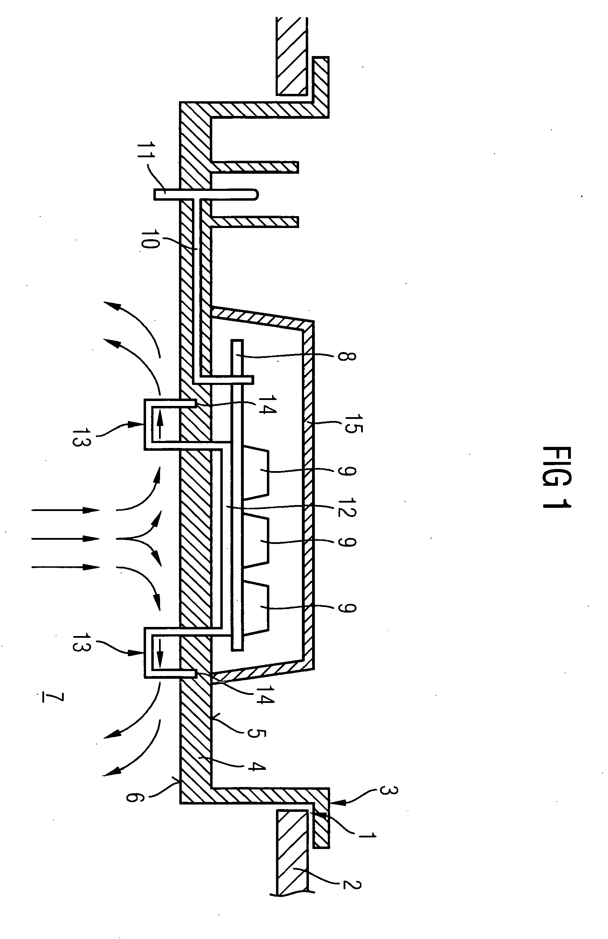

Figur 1 zeigt einen in eine Öffnung 1 eines Kraftstoffbehälters 2 eingesetzten Flansch 3 mit einer die Öffnung 1 verschließenden Wandung 4 aus Kunststoff. Die Wandung 4 des Flansches 3 weist eine zur Montage an der Außenseite des Kraftstoffbehälters 2 vorgesehene Außenseite 5 und eine Innenseite 6 auf. Die Innenseite 6 ist dem Inneren 7 des Kraftstoffbehälters 2 zugewandt. Auf der Außenseite 5 des Flansches 3 ist eine Platine 8 mit mehreren Elektronikbauteilen 9 befestigt. Die Platine 8 ist über eine in der Wandung 4 geführte Leitung 10 mit einem die Wandung 4 durchdringenden Kontakt 11 verbunden. Im montierten Zustand des Kraftstoffbehälters 2 wird über den Kontakt 11 ein innerhalb des Kraftstoffbehälters 2 angeordnetes Bauteil, wie beispielsweise eine Kraftstoffpumpe, mit elektrischem Strom versorgt. Weiterhin versorgt der Kontakt 11 die Platine 8 mit den Elektronikbauteilen 9 mit elektrischem Strom. Die Platine 8 ist auf einem Träger 12 befestigt. Der Träger 12 ist einstückig mit einem wärmeleitenden Element 13 gefertigt. Dessen Enden 14 sind durch die Wandung 4 des Flansches 3 geführt und ragen bügelförmig in das Innere 7 des Kraftstoffbehälters 2 hinein. Die freien Enden 14 des wärmeleitenden Elements 13 sind in der Wandung 4 vergossen. Die Platine 8 mit den Elektronikbauteilen 9 ist unter einem mit der Wandung 4 verbundenen Schutzgehäuse 15 angeordnet. Alternativ zu der Anordung der Elektronikbauteile 9 unter dem Schutzgehäuse 15 können die Elektronikbauteile 9 auch von einer Vergussmasse überzogen sein. Von den Elektronikbauteilen 9 erzeugte Wärme wird über das wärmeleitende Element 13 in das Innere 7 des Kraftstoffbehälters 2 geleitet. Schwappbewegungen von Kraftstoff oder eine beispielsweise von einer Saugstrahlpumpe erzeugte und in der Zeichnung mit Pfeilen gekennzeichnete Strömung an Kraftstoff leitet die Wärme von dem wärmeleitenden Element 13 ab. Dies verhindert eine Überhitzung der Elektronikbauteile 9 oder der daran angrenzenden Bauteilen.

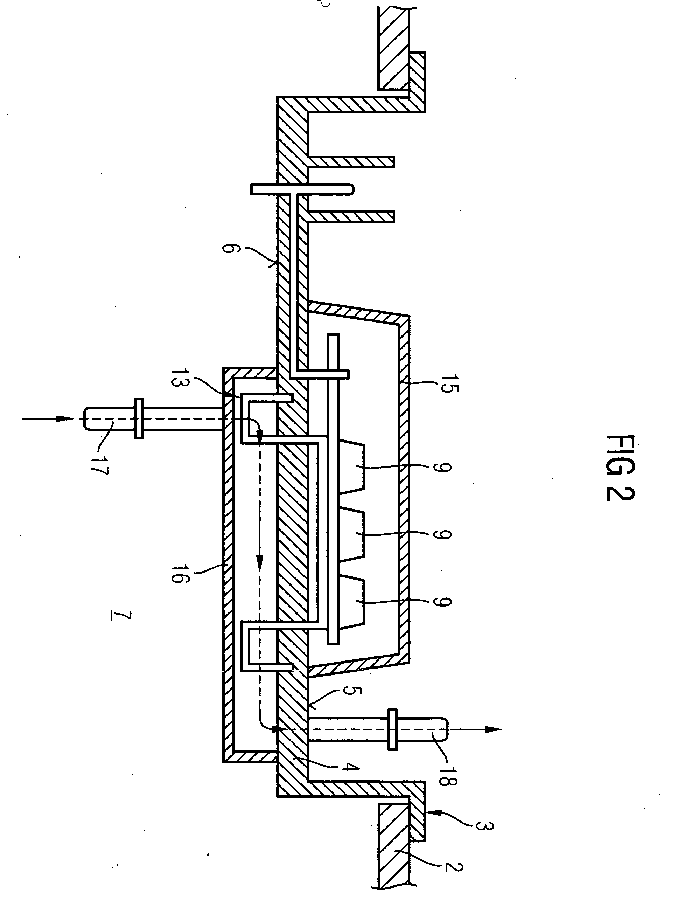

Figur 2 zeigt eine weitere Ausführungsform des erfindungsgemäßen Flansches 3, welche sich von der aus Figur 1 nur dadurch unterscheidet, dass die von der Innenseite 6 abstehenden Bereiche des wärmeleitenden Elements 13 unterhalb eines Gehäuses 16 angeordnet sind. An dem Gehäuse 16 ist ein Anschluss 17 für eine Kraftstoffleitung angeordnet, während auf der Außenseite 5 der Wandung 4 ebenfalls ein Anschluss 18 für eine nicht dargestellte, weiterführende Kraftstoffleitung angeordnet ist. Solche Anschlüsse 17, 18 dienen bei heutigen Flanschen 3 zur Durchführung einer Vorlauf- oder Rücklaufleitung, über die eine Brennkraftmaschine mit Kraftstoff versorgt wird. Bei einer Strömung von dem einen Anschluss 17 zu dem anderen Anschluss 18 wird das an der Innenseite 6 der Wandung 4 angeordnete Gehäuse 16 mit Kraftstoff durchströmt. Dabei werden die in das Gehäuse 16 hineinragenden Bereiche des wärmeleitenden Elementes 13 von Kraftstoff umspült. Damit wird die von den Elektronikbauteilen 9 erzeugte Wärme an den strömenden Kraftstoff übertragen.

In einer nicht dargestellten Ausführungsform ist das Gehäuse 16 als Führung für anströmenden Kraftstoff ausgebildet und weist eine in den Kraftstoffbehälter 2 mündende Öffnung auf. Dabei kann das Gehäuse 16, wie zu Figur 2 beschrieben, den Anschluss 17 für eine Kraftstoffleitung aufweisen.

## Patentansprüche

1. Zur Abdichtung einer Öffnung eines Kraftstoffbehälters eines Kraftfahrzeuges vorgesehener Flansch (3) mit einer Wandung (4), mit einer zur Anordnung an der Außenseite (5) des Kraftstoffbehälters anzuordnenden Außenseite der Wandung und einer in der vorgesehenen Montagestellung zum Inneren des Kraftstoffbehälters weisenden Innenseite (6) der Wandung, **dadurch gekennzeichnet,**
**dass** zumindest ein Elektronikbauteil (9) auf einer Platine (8) in einem von dem Kraftstoff abgetrennten Bereich, welcher die Außenseite (5) des Flansches (3) ist, angeordnet ist, dass ein wärmeleitendes Element (13) einstückig mit einem Träger (12) der Platine (8) ausgebildet ist und dass zumindest das wärmeleitende Element (13) bis zu der Innenseite (6) geführt ist.

2. Flansch nach Anspruch 1, **dadurch gekennzeichnet, dass** das wärmeleitende Element (13) und eine Durchführung eines elektrischen Kontaktes (11) durch die Wandung (4) als unterschiedliche Bauteile ausgebildet sind.

3. Flansch nach Anspruch 1 oder 2, **dadurch gekennzeichnet, dass** das wärmeleitende Element (13) über der Innenseite (6) übersteht.

4. Flansch nach zumindest einem der vorhergehenden Ansprüche, **dadurch gekennzeichnet, dass** das wärmeleitende Element (13) frei von der Innenseite (6) aus in den Kraftstoffbehälter (2) hineinragt.

5. Flansch nach zumindest einem der vorhergehenden Ansprüche, **dadurch gekennzeichnet, dass** an der Innenseite (6) ein das wärmeleitende Element (13) übergreifendes Gehäuse (16) angeordnet ist und dass das Gehäuse (16) einen Anschluss (17) für eine Kraftstoffleitung hat.

6. Flansch nach zumindest einem der vorhergehenden Ansprüche, **dadurch gekennzeichnet, dass** das Geäuse (16) als Führung für anströmenden Kraftstoff ausgebildet ist und eine in den Kraftstoffbehälter (2) weisende Öffnung hat.

7. Flansch nach zumindest einem der vorhergehenden Ansprüche, **dadurch gekennzeichnet, dass** das Gehäuse (16) gegenüber dem Flansch (3) abgedichtet ist und dass ein weiterer Anschluss (18) an der Außenseite (5) des Flansches (3) angeordnet und mit dem Gehäuse (16) verbunden ist.

8. Flansch nach zumindest einem der vorhergehenden Ansprüche, **dadurch gekennzeichnet, dass** auf der dem an der Innenseite (6) angeordneten Gehäuse (16) gegenüberliegend auf der Außenseite (5) ein das Elektronikbauteil (9) abdeckendes Schutzgehäuse (15) angeordnet ist oder wenn das Elektronikbauteil (9) mit einer Vergussmasse überzogen ist.

9. Flansch nach zumindest einem der vorhergehenden Ansprüche, **dadurch gekennzeichnet, dass** die Wandung (4) aus Kunststoff und das wärmeleitende Element (13) aus Metall gefertigt ist.

10. Flansch nach zumindest einem der vorhergehenden Ansprüche, **dadurch gekennzeichnet, dass** das wärmeleitende Element (13) bügelförmig von der Innenseite (6) absteht und mit seinem freien Ende in dem Kunststoff der Wandung (4) befestigt ist.

## Claims

1. Flange (3) for sealing an opening of a fuel tank of a motor vehicle, with a wall (4), with an external side of the wall, which side is to be arranged for arrangement on the external side (5) of the fuel tank, and an internal side (6) of the wall, which side faces the interior of the fuel tank in the designated installation position, **characterized in that** at least one electronic component (9) is arranged on a printed circuit board (8) in a region separated from the fuel, which region is the external side (5) of the flange (3), **in that** a heat-conducting element (13) is formed integrally with a carrier (12) of the printed circuit board (8), and **in that** at least the heat-conducting element (13) is guided as far as the internal side (6).

2. Flange as claimed in Claim 1, **characterized in that** the heat-conducting element (13) and a leadthrough of an electric contact (11) through the wall (4) are designed as different components.

3. Flange as claimed in Claim 1 or 2, **characterized in that** the heat-conducting element (13) protrudes over the internal side (6).

4. Flange as claimed in at least one of the preceding claims, **characterized in that** the heat-conducting element (13) projects freely from the internal side (6) into the fuel tank (2).

5. Flange as claimed in at least one of the preceding claims, **characterized in that** a housing (16) which engages over the heat-conducting element (13) is arranged on the internal side (6), and **in that** the housing (16) has a connection (17) for a fuel line.

6. Flange as claimed in at least one of the preceding claims, **characterized in that** the housing (16) is designed as a guide for fuel flowing against it and has an opening pointing into the fuel tank (2).

7. Flange as claimed in at least one of the preceding claims, **characterized in that** the housing (16) is sealed in relation to the flange (3), and **in that** a further connection (18) is arranged on the external side (5) of the flange (3) and is connected to the housing (16).

8. Flange as claimed in at least one of the preceding claims, **characterized in that** a protective housing (15) which covers the electronic component (9) is arranged on the external side (5) opposite the housing (16) arranged on the internal side (6), or **in that** the electronic component (9) is covered by a casting compound.

9. Flange as claimed in at least one of the preceding claims, **characterized in that** the wall (4) is manufactured from plastic and the heat-conducting element (13) is manufactured from metal.

10. Flange as claimed in at least one of the preceding claims, **characterized in that** the heat-conducting element (13) protrudes away from the internal side (6) in a stirrup-shaped manner and is fixed at its free end in the plastic of the wall (4).

## Revendications

1. Flasque (3) prévu pour rendre étanche une ouverture d'un réservoir de carburant d'un véhicule automobile, comprenant une paroi (4) ayant une face extérieure à mettre sur la face (25) extérieure du réservoir de carburant et une face (6) intérieure, tournée dans la position de montage prévue, vers l'intérieur du réservoir de carburant, **caractérisé en ce qu'**au moins un composant (9) électronique est formé sur une platine (8) dans une zone qui est séparée du carburant et qui est la face (5) extérieure du flasque (3), **en ce qu'**un élément (13) conducteur de la chaleur est constitué d'une seule pièce avec un support (12) de la platine (8) et **en ce qu'**au moins l'élément (13) conducteur de la chaleur va jusqu'à la face (6) intérieure.

2. Flasque suivant la revendication 1, **caractérisé en ce que** l'élément (13) conducteur de la chaleur et une traversée d'un contact (11) électronique traversent la paroi (4) en tant que composants différents.

3. Flasque suivant la revendication 1 ou 2, **caractérisé en ce que** l'élément (13) conducteur de la chaleur dépasse de la face (6) intérieure.

4. Flasque suivant au moins l'une des revendications précédentes, **caractérisé en ce que** l'élément (13) conducteur de la chaleur pénètre librement de la face (6) intérieure dans le réservoir (2) de carburant.

5. Flasque suivant au moins l'une des revendications précédentes, **caractérisé en ce qu'**un boîtier (6) recouvrant l'élément (13) conducteur de la chaleur est disposé sur la face (6) intérieure et **en ce que** le boîtier (6) a un raccord (17) pour un conduit pour du carburant.

6. Flasque suivant au moins l'une des revendications précédentes, **caractérisé en ce que** le boîtier (6) est constitué sous la forme d'une conduite pour du carburant affluent et a une ouverture tournée vers le réservoir (2) de carburant.

7. Flasque suivant au moins l'une des revendications précédentes, **caractérisé en ce que** le boîtier (16) est rendu étanche par rapport au flasque (3) et **en ce qu'**un autre raccord (18) est disposé sur la face (5) extérieure du flasque (3) et est relié au boîtier (16).

8. Flasque suivant au moins l'une des revendications précédentes, **caractérisé en ce que** un boîtier (5) de protection recouvrant le composant (9) électronique est disposé sur la face (5) extérieure, de manière opposée au boîtier (16) disposé sur la face (6) intérieure ou le composant (9) électronique est revêtu d'une composition de scellement.

9. Flasque suivant au moins l'une des revendications précédentes, **caractérisé en ce que** la paroi (4) est en matière plastique et l'élément (13) conducteur de la chaleur est en métal.

10. Flasque suivant au moins l'une des revendications précédentes, **caractérisé en ce que** l'élément (13) conducteur de la chaleur dépasse en forme d'étrier de la face (6) intérieure et est fixé par son extrémité libre à la matière plastique de la paroi (4).
